# EUROPEAN PATENT SPECIFICATION

(11) **EP 2 638 674 B1**
(45) Date of publication and mention of the grant of the patent: **01.04.2015**
(21) Application number: 10787042.0
(22) Date of filing: 09.11.2010
(51) Int. Cl.: H04L 27/227, H04L 7/08, H04L 1/00, H04L 27/00, H04L 27/38

(54) **DUAL CARRIER RECOVERY LOOP**
RECOVERY-KREISLAUF MIT DUALEM TRÄGER
BOUCLE DE RÉCUPÉRATION À PORTEUSES DOUBLES

(43) Date of publication of application: 18.09.2013
(73) Proprietor: Telefonaktiebolaget LM Ericsson (PUBL), 164 83 Stockholm (SE)
(72) Inventor: WEINHOLT, Dan, S-421 60 Västra Frölunda (SE); MORETTO, Maurizio, I-20060 Mediglia (Milano) (IT)
(74) Representative: Vejgaard, Christian
(86) International application number: PCT/EP2010/067110
(87) International publication number: WO 2012/062358

(56) References cited:
- EP-A2- 0 243 589
- EP-A2- 1 154 596
- US-A1- 2004 252 229

## Description

### TECHNICAL FIELD

The present invention relates to a receiver in a communication system for receiving digital communication, the receiver being arranged to process a transmitted signal, where the receiver comprises demodulator means arranged to demodulate received signal data symbols of a higher constellation order such that a demodulated signal is obtained. The present invention also relates to a method in the receiver for obtaining an estimation of the transmitted signal.

### BACKGROUND

QAM (Quadrature Amplitude Modulation) is a digital modulation/ demodulation scheme. Two digital bit streams are conveyed by modulating the amplitude of the two carrier waves. To do this, an amplitude-shift keying suppressed carrier (ASK-SC) digital modulation scheme is used. The waves are out of phase with each other by 90 degrees and are called quadrature carriers/components. The modulated waves are summed and the result waveform is a combination of both phase-shift keying (PSK) and ASK.

When demodulating the waveform, phase tracking is a known method used in QAM. A carrier recovery loop is often used for enabling a coherent demodulation of relatively high order QAM constellations. In order to improve the phase tracking performance, "pilot" symbols of relatively low constellation order are periodically inserted, such as for instance 4QAM symbols. Pilot symbols of higher constellation order may be used for higher order QAM constellation demodulation.

By inserting the pilot symbols, the performance is improved because the number of decision errors of these relatively low constellation order "pilot" symbols is less than that of the data symbols. The reduced error probability is utilized in the carrier recovery PLL (Phase Lock Loop) by applying a higher weight for pilot symbols relative the data symbols.

Even with different weights, this type of carrier recovery will produce fairly long error bursts and further improvement can be achieved by a "pre-estimation" of the carrier phase based on the pilot symbols provided that this symbol sequence is known by the receiver. The received signal is compensated by this pre-calculated phase before the carrier recovery PLL, which to a large extent reduce the burst error probability due to a reduced phase lag error in the PLL.

A problem with the solution is that the pilot symbols cannot be used for carrying data since a known sequence is used and the data throughput is thereby reduced in proportion to the rate of pilot symbols.

Document EP-1 154 596 discloses a receiver and a corresponding method in a communication system the receiver being arranged to estimate a received signal, where the receiver comprises demodulator means arranged to demodulate received signal data symbols of a higher constellation order such that a demodulated signal is obtained, the demodulator means comprising a main carrier recovery Phase-Locked Loop arranged to demodulate the data and pilot symbols. The demodulator means further comprising phase calculation means arranged to provide phase information from the pilot symbols of lower constellation order to the main carrier recovery PLL, wherein the phase calculation means further comprises a pilot Phase-Locked Loop, PLL, arranged to extract the phase information from the pilot symbols.

Document US 2004/0252229 discloses the use of data symbols for carrier phase estimation, with the aim of reducing the overhead normally consumed by pilot and signalling bits.

### SUMMARY

The object of the present invention is therefore to provide phase information from the pilot symbols, based on demodulated symbols instead of a known sequence, for the QAM carrier recovery PLL in order to avoid large errors in the PLL.

This object is obtained by means of a receiver in a communication system, the receiver being arranged to process a received signal. The receiver comprises demodulator means arranged to demodulate received signal data symbols of a higher constellation order such that a demodulated signal is obtained. The demodulator means comprises a main carrier recovery Phase-Locked Loop, PLL, arranged to enable demodulation of the data and pilot symbols. The demodulator means further comprises phase calculation means arranged to provide phase information from the pilot symbols of lower constellation order to the main carrier recovery PLL. The receiver is particularly characterized in that the phase calculation means further comprises a pilot Phase-Locked Loop, PLL, arranged to extract the phase information from the pilot symbols.

The object of the present invention is also achieved by means of a method in a receiver in a communication system for estimating a received signal. The receiver comprises demodulator means demodulating received signal data symbols of a higher constellation order such that a demodulated signal is obtained. The demodulator means comprises a main carrier recovery Phase-Locked Loop demodulating the data and pilot symbols. The demodulator means further comprises phase calculation means providing phase information from the pilot symbols of lower constellation order to the main carrier recovery PLL. The method particularly comprises the step of a pilot Phase-Locked Loop, PLL, in the phase calculation means extracting the phase information from the pilot symbols.

Several advantages are obtained by means of the present invention. For example since demodulated pilot symbols are used instead of a known sequence, the data throughput is increased. Since the phase calculation from the pilot symbols is based on demodulated symbols, these pilot symbols can be used to carry data. Further advantages will emerge from the detailed description.

### BRIEF DESCRIPTION OF THE DRAWINGS

The present invention will now be described more in detail with reference to the appended drawings, where:
- Figure 1: schematically shows a known pilot symbol aided receiver;
- Figure 2: schematically shows a pilot symbol aided receiver according to the present invention;
- Figure 3: shows a flow chart of a method according to the present invention.

### DETAILED DESCRIPTION

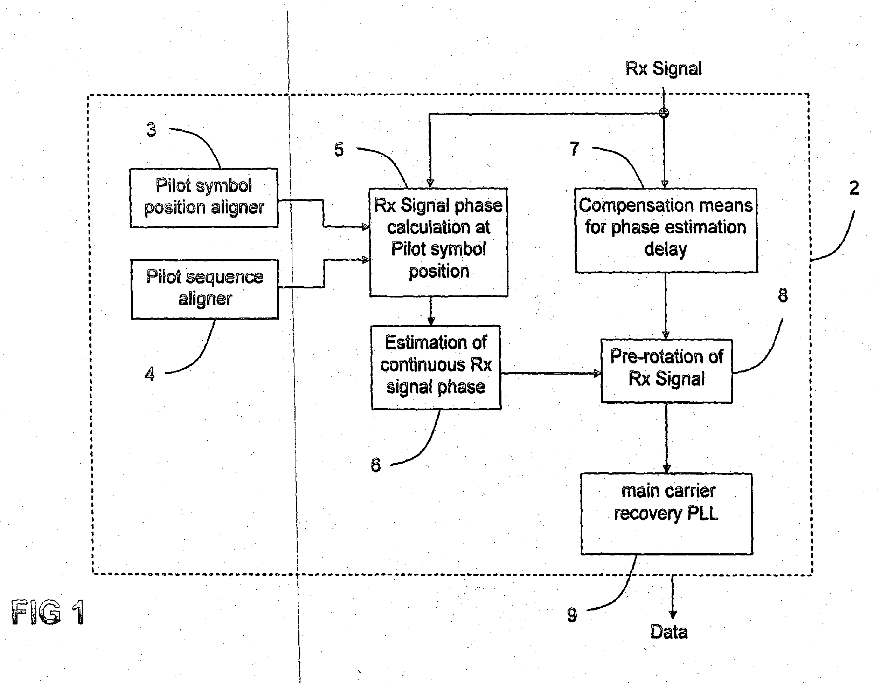

Figure 1 shows a known pilot symbol aided receiver for coherent demodulation of high order QAM constellations. The receiver is arranged for processing a received signal (Rx Signal). The receiver comprises demodulator means 2 arranged to demodulate the received signal (Rx Signal) data symbols of a higher constellation order such that a demodulated signal (Data) is obtained.

The demodulator means comprises a main carrier recovery Phase-Locked Loop, PLL, 9 arranged to enable demodulation of the data and pilot symbols. The demodulator means further comprising phase calculation means 5 arranged to provide phase information from the pilot symbols of lower constellation order to the main carrier recovery PLL. The higher constellation of the data symbols may be for instance 256 QAM (Quadrature Amplitude Modulation), while the lower constellation of the pilot symbols is an even multiple of the higher constellation in terms of phase ambiguity, such as for instance 4 or 8 QAM. Higher constellations than 256 QAM for the data symbols is also possible within the scope of the present invention.

The receiver further comprises compensation means 7 to compensate the delay of the received signal and means 8 to pre-rotate the received signal. Furthermore, the receiver comprises means 6 to estimate the continuous phase of the received signal, wherein the pre-rotation is based on the estimated signal phase. The pre-rotated signal is fed to means to decide upon the data and pilot symbols, said means comprising the main carrier recovery PLL (Phase Lock Loop) 9 enabling a coherent demodulation of the higher order constellations.

The phase calculation means 5 periodically provides pilot symbols of lower constellation order, for example 4 or 8 QAM, to said means 6 for estimating the continuous phase of the signal. Pilot symbols of higher constellation order may be used for data symbols with higher constellation order. The constellation order of the data symbols is always higher than the (lower) constellation order of the pilot symbols. In order to provide information for the pilot symbols phase calculation, means 3 to align the pilot symbol position and means 4 to align the pilot sequence are provided. Said means provide said information to the phase calculation means.

The object of the present invention is to provide phase information from the pilot symbols, based on demodulated symbols instead of a known sequence, for the QAM carrier recovery PLL in order to avoid large errors in the PLL.

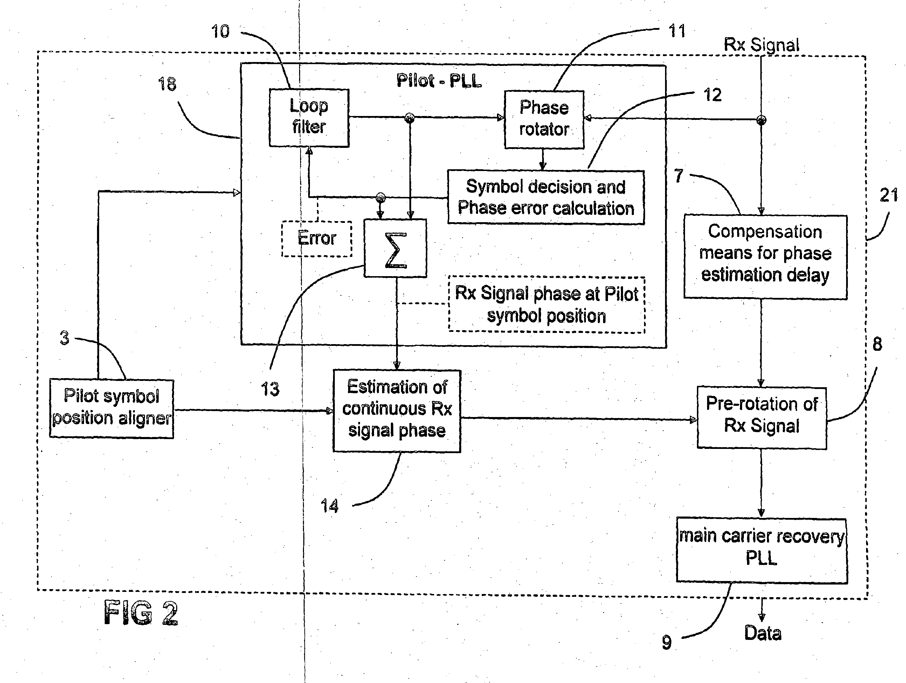

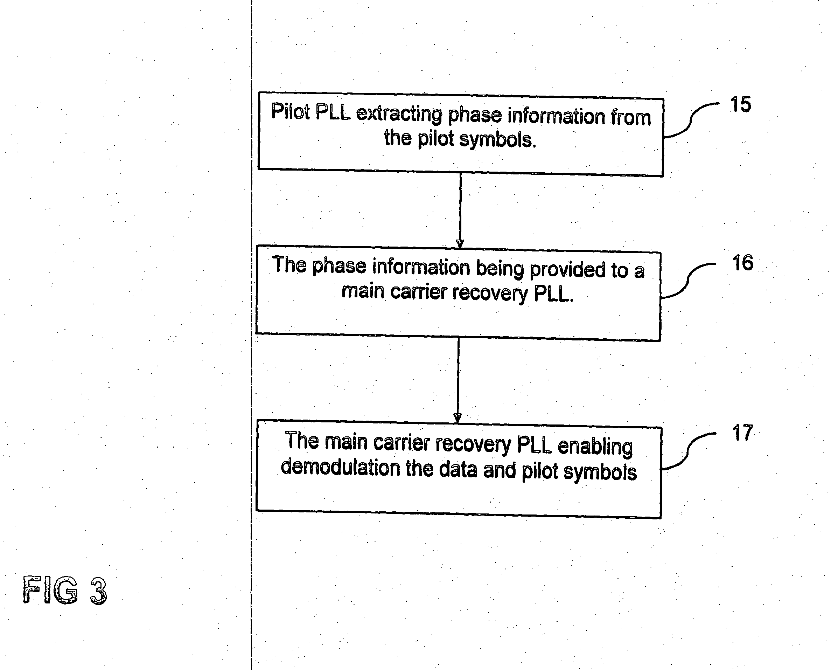

The object is solved by a phase calculation means, which comprises a pilot Phase-Locked Loop, PLL, 18 being arranged to extract the phase information from the pilot symbols, see figures 2 and 3.

The advantage with this solution is that since demodulated pilot symbols are used instead of a known sequence, the data throughput is increased. Since the phase calculation from the pilot symbols is based on demodulated symbols, these pilot symbols can be used to carry data. The pilot PLL 18 is preferably arranged to extract phase information with a 90 degrees or 180 degrees ambiguity. This is required in case of N-QAM modulation, which is the baseline.

In the following, a receiver embodiment will be described. Said receiver comprises means arranged to perform certain procedures or method step. It should therefore be understood by a person skilled in the art that the embodiment also illustrates a method in the receiver for estimating a received signal.

Figure 2 shows an example of a pilot-PLL 18 as part of a receiver. The pilot-PLL 18 comprises means 11 to rotate the phase of the received signal (Rx Signal). The pilot-PLL further comprises means 12 to calculate the pilot symbol of the received signal. Said pilot-PLL also comprises means arranged to determine a tracking error (Error) of the received signal. Said means 12 consist in a slicer being able to create the pilot symbol and the tracking error. Note that the pilot PLL uses the tracking error for all symbols, not only pilot symbols.

The pilot-PLL further comprises means 10 to filter the tracking error of the received signal, said filtered error being fed back to said means 11 rotating the phase of the received signal.

In order to achieve the true phase of the pilot symbols, the pilot-PLL 18 further comprises means 13 arranged to combine the tracking error with filtered pilot symbols into the phase information of the received signal. Thereby phase information from the pilot symbols is extracted instead of using knowledge of the pilot sequence. This also means that the pilot-PLL 18 only receives means 3 to align the pilot symbol position. No information about the pilot sequence is provided.

The demodulator further comprises means 14 to estimate the phase of the continuous received signal on the basis of the extracted phase information from the pilot symbols. The demodulator further comprises means 8 to use the estimated phase of the received signal phase in a pre-rotation of the received signal.

The main carrier recovery PLL 9 is arranged to use the pre-rotated, received signal to demodulate the data and pilot symbols. Since the received signal is pre-rotated on the basis of the estimated continuous phase of the received signal, and since the phase is estimated on the basis of a phase calculation based on demodulated pilot symbols instead of a known sequence, data throughput is higher than when a known sequence is used for the phase estimation.

The present invention is not limited to the examples above, but may vary freely within the scope of the claims. For example, the receiver does not have to be a receiver for QAM demodulation. Instead, the present invention can be used in any receiver where there is a need to provide coherent demodulation and where the phase tracking using pilot symbols have to be improved. The requirement is however that the demodulation is performed by using a Phase Lock Loop.

Furthermore, the receiver may be made in many different ways known to the skilled person, the shown arrangement is only one example of many. Furthermore, some components may be omitted and some, thus not shown components, may be added.

The present invention relates to the receiver, although the receiver is intended to be used together with a transmitter. It should nevertheless be understood that the present invention only lies in the receiver.

The present invention is finally applicable for any type of modulation that may be represented by means of an I component and a Q component, for example PSK, Phase Shift Keying.

## Claims

1. Receiver in a communication system, the receiver being arranged to process a received signal (Rx Signal), said signal being modulated using a Quadrature Amplitude Modulation technique and comprising data symbols modulated with a relatively high constellation order and pilot symbols modulated with a relatively low constellation order, where the receiver comprises demodulator means (21) arranged to demodulate said signal data symbols of said relatively high constellation order such that a demodulated signal (Data) is obtained, the demodulator means (21) comprising a main carrier recovery Phase-Locked Loop, PLL, (9) arranged to enable demodulation of the data and pilot symbols, the demodulator means (21) further comprising phase calculation means (14, 18) arranged to provide phase information from the pilot symbols of said relatively low constellation order to the main carrier recovery PLL (9),
**characterized in that**
the phase calculation means (14, 18) comprises a pilot Phase-Locked Loop, PLL, (18) arranged to extract the phase information from the pilot symbols based on demodulated symbols carrying data, wherein the pilot PLL (18) comprises means (12) arranged to determine a tracking error of the received signal (Rx Signal), said pilot PLL (18) further comprising means (13) arranged to combine the tracking error for all symbols with the extracted phase information from the pilot symbols into the phase information of the received signal (Rx Signal), said receiver further comprising means (8) to pre-rotate the received signal, the means (8) to pre-rotate the received signal being configured to use the estimated phase of the received signal phase in a pre-rotation of the received signal.

2. Receiver according to claim 1, wherein the demodulator means comprises means (14) arranged to estimate a continuous received signal phase on the basis of the phase information.

3. Receiver according to claim 2, wherein the demodulator means is arranged to use the continuous received signal phase in a pre-rotation of the received signal (Rx Signal).

4. Receiver according to claim 3, wherein the main carrier recovery PLL (9) is arranged to use the pre-rotated received signal to enable demodulation of the data and pilot symbols.

5. Receiver according to any of the preceding claims wherein the pilot PLL (18) is arranged to extract phase information with a 90 degrees ambiguity.

6. A method for a receiver in a communication system, the method for processing a received signal (Rx Signal), said signal being modulated using a Quadrature Amplitude Modulation technique and comprising data symbols modulated with a relatively high constellation order and pilot symbols modulated with a relatively low constellation order, said method comprising:
- extracting phase information from the pilot symbols by a pilot PLL based on demodulated symbols carrying data;
- providing the phase to a main carrier recovery PLL;
- demodulating the data and pilot symbols using said main carrier recovery PLL, wherein said method comprises:
- determining a tracking error of the received signal;
- combining the tracking error for all symbols with the extracted phase information from the pilot symbols into the phase information of the received signal (Rx Signal);
- pre-rotating the received signal, wherein the pre-rotating comprises using the estimated phase of the received signal phase in a pre-rotation of the received signal.

7. Method according to claims 6, said method comprising:
- estimating the continuous received signal phase on the basis of the phase information.

8. Method according to claim 7, said method comprising:
- using the continuous received signal phase in a pre-rotation of the received signal (Rx Signal).

9. Method according to claim 8, said method comprising:
- using the pre-rotated received signal to demodulate the data and pilot symbols.

10. Method according to any of the claims 6 - 9, said method comprising:
- extracting phase information with a 90 degrees ambiguity.

## Patentansprüche

1. Empfänger in einem Kommunikationssystem, wobei der Empfänger dafür eingerichtet ist, ein empfangenes Signal (Rx-Signal) zu verarbeiten, wobei besagtes Signal unter Verwendung einer Quadrature-Amplitude-Modulation-Technik moduliert ist und Datensymbole, die mit einer relativ hohen Konstellationsordnung moduliert sind, und Pilotsymbole, die mit einer relativ niedrigen Konstellationsordnung moduliert sind, umfasst, wobei der Empfänger ein Demodulatormittel (21) umfasst, das dafür eingerichtet ist, besagte Signaldatensymbole besagter relativ hoher Konstellationsordnung so zu demodulieren, dass ein demoduliertes Signal (Daten) gewonnen wird, wobei das Demodulatormittel (21) eine Hauptträger-Recovery-Phasenregelschleife, PLL, (9) umfasst, die dafür eingerichtet ist, Demodulation der Daten- und Pilotsymbole zu ermöglichen, wobei das Demodulatormittel (21) ferner ein Phasenberechnungsmittel (14, 18) umfasst, das dafür eingerichtet ist, Phaseninformation aus den Pilotsymbolen besagter relativ geringer Konstellationsordnung an die Hauptträger-Recovery-PLL (9) bereitzustellen,
**dadurch gekennzeichnet, dass**
das Phasenberechnungsmittel (14, 18) eine Pilot-Phasenregelschleife, PLL, (18) umfasst, die dafür eingerichtet ist, die Phaseninformation aus den Pilotsymbolen auf Grundlage demodulierter Symbole, die Daten tragen, zu extrahieren, wobei die Pilot-PLL (18) ein Mittel (12) umfasst, das dafür eingerichtet ist, einen Tracking-Fehler des empfangenen Signals (Rx-Signal) zu ermitteln, wobei besagte Pilot-PLL (18) ferner ein Mittel (13) umfasst, das dafür eingerichtet ist, den Tracking-Fehler für alle Symbole mit der extrahierten Phaseninformation aus den Pilotensymbolen zu der Phaseninformation des empfangenen Signals (Rx-Signal) zu kombinieren, wobei besagter Empfänger ferner ein Mittel (8) zum Vorrotieren des empfangenen Signals umfasst, wobei das Mittel (8) zum Vor-Rotieren des empfangenen Signals dafür konfiguriert ist, die abgeschätzte Phase der empfangenen Signalphase in einer Vorrotation des empfangenen Signals zu verwenden.

2. Empfänger gemäß Anspruch 1, bei dem das Demodulatormittel ein Mittel (14) umfasst, das dafür eingerichtet ist, eine kontinuierlich empfangene Signalphase auf der Grundlage der Phaseninformation abzuschätzen.

3. Empfänger gemäß Anspruch 2, bei dem das Demodulatormittel dafür eingerichtet ist, die kontinuierlich empfangene Signalphase in einer Vorrotation des empfangenen Signals (Rx-Signal) zu verwenden.

4. Empfänger gemäß Anspruch 3, bei dem die Hauptträger-Recovery-PLL (9) dafür eingerichtet ist, das vorrotierte empfangene Signal zu verwenden, um Demodulation der Daten- und Pilotsymbole zu ermöglichen.

5. Empfänger gemäß einem der vorhergehenden Ansprüche, bei dem die Pilot-PLL (18) dafür eingerichtet ist, Phaseninformation mit einer 90-Grad-Mehrdeutigkeit zu extrahieren.

6. Verfahren für einen Empfänger in einem Kommunikationssystem, das Verfahren zum Verarbeiten eines empfangenen Signals (Rx-Signal), wobei besagtes Signal unter Verwendung einer Quadrature-Amplitude-Modulation-Technik moduliert ist und Datensymbole, die mit einer relativ hohen Konstellationsordnung moduliert sind, und Pilotsymbole, die mit einer relativ niedrigen Konstellationsordnung moduliert sind, umfasst, besagtes Verfahren umfassend:
- Extrahieren von Phaseninformation aus den Pilotsymbolen durch eine Pilot-PLL auf Grundlage demodulierter Symbole, die Daten tragen;
- Bereitstellen der Phase an eine Hauptträger-Recovery-PLL;
- Demodulieren der Daten- und Pilotsymbole unter Verwendung besagter Hauptträger-Recovery-PLL, wobei besagtes Verfahren umfasst:
- Ermitteln eines Tracking-Fehlers des empfangenen Signals;
- Kombinieren des Tracking-Fehlers für alle Symbole mit der extrahierten Phaseninformation aus den Pilotsymbolen zu der Phaseninformation des empfangenen Signals (Rx-Signal);
- Vorrotieren des empfangenen Signals, wobei das Vorrotieren das Verwenden der abgeschätzten Phase der empfangenen Signalphase in einer Vorrotation des empfangenen Signals umfasst.

7. Verfahren gemäß Anspruch 6, wobei besagtes Verfahren umfasst:
- Abschätzen der kontinuierlich empfangenen Signalphase auf Grundlage der Phaseninformation.

8. Verfahren gemäß Anspruch 7, wobei besagtes Verfahren umfasst:
- Verwenden der kontinuierlich empfangenen Signalphase in einer Vorrotation des empfangenen Signals (Rx-Signal).

9. Verfahren gemäß Anspruch 8, wobei besagtes Verfahren umfasst:
- Verwenden des vorrotierten empfangenen Signals, um die Daten- und Pilotsymbole zu demodulieren.

10. Verfahren gemäß einem der Ansprüche 6 - 9, wobei besagtes Verfahren umfasst:
- Extrahieren von Phaseninformation mit einer 90-Grad-Mehrdeutigkeit.

## Revendications

1. Récepteur d'un système de communication, le récepteur étant aménagé pour traiter un signal reçu (signal Rx), ledit signal étant modulé en utilisant une technique de modulation d'amplitude en quadrature et comprenant des symboles de données modulés avec un ordre de constellation relativement élevé et des symboles pilotes modulés avec un ordre de constellation relativement bas, dans lequel le récepteur comprend des moyens démodulateurs (21) aménagés pour démoduler lesdits symboles de données de signaux dudit ordre de constellation relativement élevé de sorte qu'un signal démodulé (Data) soit obtenu, les moyens démodulateurs (21) comprenant une boucle verrouillée en phase PLL de récupération (9) de la porteuse principale aménagée pour permettre une démodulation des symboles de données et des symboles pilotes, les moyens démodulateurs (21) comprenant en outre des moyens de calcul de phase (14, 18) aménagés pour fournir des informations de phase à partir des symboles pilotes dudit ordre de constellation relativement bas au PLL de récupération (9) de la porteuse principale,
**caractérisé en ce que** :
les moyen de calcul de phase (14, 18) comprennent une boucle verrouillée en phase PLL pilote (18) aménagée pour extraire les informations de phase des symboles pilotes sur la base de symboles démodulés portant des données, dans lequel la PLL pilote (18) comprend des moyens (12) aménagés pour déterminer une erreur de suivi du signal reçu (signal Rx), ladite PLL pilote (18) comprenant en outre des moyens (13) aménagés pour combiner l'erreur de suivi pour tous les symboles avec les informations de phase extraites des symboles pilotes dans les informations de phase du signal reçu (signal Rx), ledit récepteur comprenant en outre des moyens (8) pour faire préalablement tourner le signal reçu, les moyens (8) permettant de faire préalablement tourner le signal reçu étant configurés pour utiliser la phase estimée de la phase du signal reçu dans une prérotation du signal reçu.

2. Récepteur selon la revendication 1, dans lequel les moyens démodulateurs comprennent des moyens (14) aménagés pour estimer une phase de signal reçu continue sur la base des informations de phase.

3. Récepteur selon la revendication 2, dans lequel les moyens démodulateurs sont aménagés pour utiliser la phase de signal reçu continue dans une prérotation du signal reçu (signal Rx).

4. Récepteur selon la revendication 3, dans lequel la PLL de récupération (9) de la porteuse principale est aménagée pour utiliser le signal reçu soumis à une prérotation pour permettre la démodulation des symboles de données et des symboles pilotes.

5. Récepteur selon l'une quelconque des revendications précédentes, dans lequel la PLL pilote (18) est aménagée pour extraire des informations de phase avec une ambiguïté de 90 degrés.

6. Procédé pour un récepteur dans un système de communication, le procédé visant à traiter un signal reçu (signal Rx), ledit signal étant modulé en utilisant une technique de modulation d'amplitude en quadrature et comprenant des symboles de données modulés avec un ordre de constellation relativement élevé et des symboles pilotes modulés avec un ordre de constellation relativement bas, ledit procédé comprenant les étapes consistant à :
- extraire des informations de phase des symboles pilotes par une PLL pilote sur la base de symboles démodulés portant des données ;
- fournir la phase à une PLL de récupération de la porteuse principale ;
- démoduler les symboles de données et les symboles pilotes en utilisant ladite PLL de récupération de la porteuse principale, dans lequel ledit procédé comprend les étapes consistant à :
- déterminer une erreur de suivi du signal reçu ;
- combiner l'erreur de suivi de tous les symboles avec les informations de phase extraites des symboles pilotes dans les informations de phase du signal reçu (signal Rx) ;
- soumettre à une prérotation le signal reçu, dans lequel la prérotation comprend l'utilisation de la phase estimée de la phase de signal reçu dans une prérotation du signal reçu.

7. Procédé selon la revendication 6, ledit procédé comprenant l'étape consistant à :
- estimer la phase de signal reçu continue sur la base des informations de phase.

8. Procédé selon la revendication 7, ledit procédé comprenant :
- l'utilisation de la phase de signal reçu continue dans une prérotation du signal reçu (signal Rx).

9. Procédé selon la revendication 8, ledit procédé comprenant :
- l'utilisation du signal reçu soumis à une prérotation pour démoduler les symboles de données et les symboles pilotes.

10. Procédé selon l'une quelconque des revendications 6 à 9, ledit procédé comprenant :
- l'extraction d'informations de phase avec une ambiguïté de 90 degrés.
